# EUROPEAN PATENT SPECIFICATION

(11) **EP 1 426 098 B1**
(45) Date of publication and mention of the grant of the patent: **16.06.2010**
(21) Application number: 02798031.7
(22) Date of filing: 04.09.2002
(51) Int. Cl.: B01D 71/56, B01D 69/12, B01D 67/00

(54) **SEMIPERMEABLE COMPOSITE MEMBRANE AND PROCESS FOR PRODUCING THE SAME**
HALBDURCHLÄSSIGE VERBUNDMEMBRAN UND VERFAHREN ZUR HERSTELLUNG DERSELBEN
MEMBRANE COMPOSITE SEMI-PERMEABLE ET SON PROCEDE DE FABRICATION

(30) Priority: 10.09.2001 JP 2001273277
(43) Date of publication of application: 09.06.2004
(73) Proprietor: NITTO DENKO CORPORATION, Ibaraki-shi, Osaka 567-8680 (JP)
(72) Inventor: OHARA, Tomomi, c/o NITTO DENKO CORPORATION, Ibaraki-shi, Osaka 567-8680 (JP); HIROSE Masahiko, c/o NITTO DENKO CORPORATION, Ibaraki-shi, Osaka 567-8680 (JP); SHINTANI Takuji, c/o NITTO DENKO CORPORATION, Ibaraki-shi, Osaka 567-8680 (JP)
(74) Representative: Sajda, Wolf E.
(86) International application number: PCT/JP2002/008989
(87) International publication number: WO 2003/022411

(56) References cited:
- EP-A1- 0 787 525
- GB-A- 2 352 722
- JP-A- 5 317 669
- JP-A- 5 329 344
- JP-A- 11 137 982
- JP-A- 2000 117 076
- JP-A- 2000 334 280
- US-A- 5 576 057

## Description

### Technical Field

The present invention relates to a composite semipermeable membrane for separating a component of a liquid mixture selectively, and a method for manufacturing the same, and in particular a composite semipermeable membrane comprising a thin film made mainly of a polyamide on a porous base material and having practical water flux, desalting faculty and endurance, and a method for manufacturing the same.

The composite semipermeable membrane is suitable for manufacture of ultra pure water, demineralization of brine water or seawater, etc., and removes and collects pollution sources or effective ingredients included in pollution as source of public nuisance, such as dyeing wastewater and electrodeposition paint wastewater, which may contribute for realizing a closed system for wastewater. Moreover, it may also be used for concentration of effective ingredients for food application etc.

### Background Art

As semipermeable membranes used for purposes described above, there are known asymmetrical membranes wherein asymmetrical structures are made of the same material by a phase-separating method and composite semipermeable membranes wherein a thin film which is made of different materials and has a selective separability is formed on a porous base material.

As the latter semipermeable membranes, suggested are a great number of composite semipermeable membranes wherein a thin film made of a polyamide obtained by interfacial polymerization of a polyfunctional aromatic amine and a polyfunctional aromatic acid halide is formed on a porous base material (for example, JP-A Nos. S55-147106, S62-121603, S63-218208, H2-187135, and so on).

The document EP- A- 0 787 525 discloses composite reverse osmosis membranes comprising polyamide films obtained from the reaction of aromatic, aliphatic, or allicyclic polyfunctional amines with aromatic, aliphatic, or alicyclic polyfunctional acid halides. Examples containing films fabricated from aromatic diamines and aromatic acid halides exhibited high salt rejection levels of more than 99 % and useful fluxes in the range of about 2 m³/m² · day. The membranes were shown to be stable towards sodium hypochloride exposure for up to 62 hours.

The document JP-A-2000-334 280 discloses similar composite membranes fabricated from aromatic, aliphatic or alicyclic polyfunctional amines and acid halides. The membranes prepared using m-phenylene diamine and trimesic acid chloride exhibited excellent salt rejection levels of more than 99 % and useful fluxes of about 0.7 m³/m² · day. Membrane stability towards sodium hypochloride was demonstrated for up to 30 minutes exposure.

Suggested are also composite semipermeable membranes wherein a thin film made of a polyamide obtained by interfacial polymerization of a polyfunctional aromatic amine and a polyfunctional alicyclic acid halide is formed on a porous base material (for example, JP-A No. S61-42308, and so on).

In order to improve the water flux of the above-mentioned composite semipermeable membranes further, additives are suggested. There are known substances capable of removing hydrogen halide generated by interfacial reaction, such as sodium hydroxide or trisodium phosphate; known acylating catalysts; compounds for decreasing the interfacial tension on a reaction field at the time of interfacial reaction; and so on (for example, JP-A Nos. S63-12310, H6-47260, H8-224452 and so on).

For these semipermeable membranes, endurance such that various oxidizers can be resisted, in particular, washing with chlorine can be resisted is demanded in light of more stable operability in various water treatment plants, a typical example of which is a water-producing plant, and pursuit of low costs based on prolongation of the lifespan of the membranes. It is said that the polyamide-based semipermeable membranes exemplified above have practical oxidizer resistance. It is not, however, said that all of them have resistance having such a level that constant or intermittent chlorine-sterilization can be resisted for a long time. It is therefore desired to develop semipermeable membranes having both of a higher oxidizer resistance and practical water flux and desalting faculty.

For these purposes, suggested are a composite membrane obtained from a diamine having only a secondary amino group (JP-A No. S55-139802), a composite membrane using N-alkyl-phenylenediamine(JP-A No. H8-500279),a composite membrane obtained using an aliphatic diamine or alicyclic diamine (JP-A Nos. S58-24303, S59-26101, S59-179103, H1-180208, and H2-78428), a composite membrane having a diphenylsulfone structure (JP-A Nos. S62-176506, S62-213807 and S62-282603), a membrane to which a chlorine-resistance is given by post-treatment (JP-A No. H5-96140), and so on.

However, these membranes do not have water flux, desalting faculty and oxidizer resistance which are required for practical semipermeable membranes. Thus, higher properties are demanded.

That is, as mentioned above, in polyamide based reverse osmotic membranes, although it was known that polyamides whose amido bonds consist of secondary amines have excellent oxidizer resistance, they did not have satisfactorily enough desalting faculty and water flux as semipermeable membranes.

For example, the JP-A No. S55-139802 official report has proposed a composite membrane obtained from diamines having only secondary amino groups. Although the official report has illustrated N,N'-dimethyl-m-phenylenediamine as the diamine, a semipermeable membrane that has a polyamide consisting of N,N'-dimethyl-m-phenylenediamine and trimesic acid chloride, as a principal component, provides permeation flux about at most 0.3 - 0.7 m³/(m²·day), when a test is performed under conditions of a pressure of 1.5 MPa, a temperature of 25 °C, and pH = 7 using 0.15% of NaCl aqueous solution, which cannot provide sufficient practicality. The JP-A No. H8-500279 official report disclosed a composite semipermeable membrane having N-methyl-phenylenediamine etc. as a diamine component, but this provides a permeation flux only about 0.5 - 1.2 m³/(m²·day). Therefore, higher water flux is desired.

In addition, the above-mentioned JP-A No. H1-180208 discloses a manufacturing method including a process in which a polyamide based composite semipermeable membrane obtained using polyfunctional aromatic amines and aliphatic diamines together is immersed in a chlorine containing aqueous solution of pH = 6 to 13, but does not suggest at all whether the method might be applicable for other composite semipermeable membranes.

Then, an object of the present invention is to provide a composite semipermeable membrane having practical water flux, and excellent desalting faculty and excellent oxidizer resistance, and a method for manufacturing the same.

### Disclosure of the Invention

As a result of repeated examination wholeheartedly carried out by the present inventors in order to attain the above-mentioned object, it was found out that a polyamide that is obtained using a secondary diamine whose hydrogen of N position of an aromatic diamine is substituted by an alkyl group might have higher oxidizer resistance than a polyamide obtained using a non-substituted primary diamine, and that water flux greatly improves, without reducing obstruction performance of various solutes, by contacting the polyamide with an aqueous oxidizer solution, leading to completion of the present invention.

That is, a method for manufacturing a composite semipermeable membrane of the present invention comprises a contact step in which a composite semipermeable membrane comprising a thin film including a polyamide based resin having a constitutional unit represented with following general formulae (I) and/or (II), and a porous support membrane for supporting the thin film is contacted with an aqueous oxidizer solution. 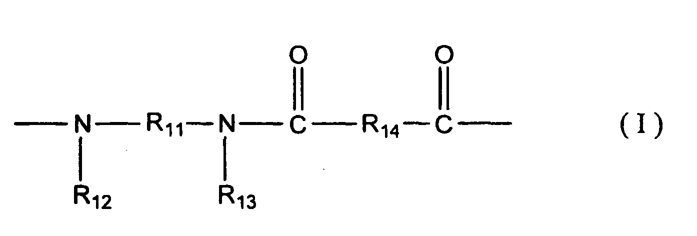 wherein R₁₁ represents a divalent organic group having a benzene ring or a naphthalene ring in a principal chain, R₁₂ and R₁₃ are independently an alkyl group of carbon numbers 1 - 5 that may include -O- or -S-, or a hydrogen atom, respectively, and at least one of R₁₂ and R₁₃ is an alkyl group of carbon numbers 1 - 5 that may include -O- or -S-. R₁₄ represents a divalent organic group. 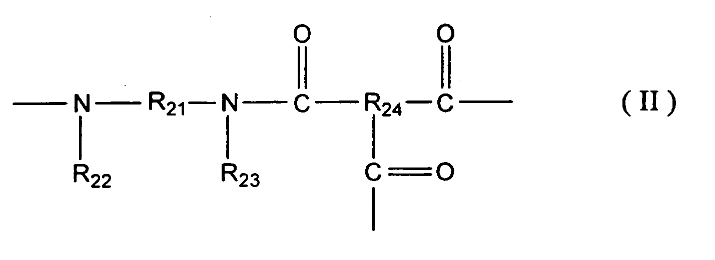 wherein R₂₁ represents a divalent organic group having a benzene ring or a naphthalene ring in a principal chain, R₂₂ and R₂₃ are independently an alkyl group of carbon numbers 1 - 5 that may include -O- or -S-, or a hydrogen atom, respectively, and at least one of R₂₂ and R₂₃, is an alkyl group of carbon numbers 1 - 5 that may include -O- or -S-. R₂₄ represents a trivalent organic group.

In the above-mentioned method, the contact step is preferably performed by immersing the composite semipermeable membrane in an aqueous oxidizer solution under an atmospheric pressure, or by permeating the aqueous oxidizer solution with pressure into the composite semipermeable membrane.

It is preferable that the aqueous oxidizer solution is a sodium hypochlorite aqueous solution, a hydrogen peroxide solution, or an ozone-injected water.

On the other hand, a composite semipermeable membrane of the present invention is a composite semipermeable membrane manufactured by one of the above described manufacturing methods, and is **characterized in that** a permeation flux is not less than 1.3 m³/(m²· day) when a test is performed on conditions of a pressure 1.5 MPa, a temperature of 25 °C, and pH = 7 using 0.15% by weight of NaCl aqueous solution, and preferably the permeation flux is not less than 1.5 m³/(m²· day), and a rate of blocking salt being not less than 90%.

According to a method for manufacturing a composite semipermeable membrane of the present invention, a composite semipermeable membrane that has a polyamide obtained from an aromatic diamine, whose one hydrogen in N position is substituted by an alkyl group, as a skin can have practically excellent desalting faculty and oxidizer resistance, and, as results of Example show, can greatly improve water flux, without reducing blocking performance of various solutes, by contacting the membrane with an aqueous oxidizer solution. In addition, a reason is not yet certain why a polyamide having the above-mentioned residues of secondary aromatic diamines greatly improves water flux by contact with an aqueous oxidizer solution without reducing blocking performance, but it is conceivable that substitution of a hydrogen in N position of an aromatic diamine by an alkyl group suitably improves hydrophilic property caused by increase in functional group in part by function of chlorine etc., while maintaining blocking performance resulting from aromatic ring structure.

On the other hand, according to a composite semipermeable membrane of the present invention, the above-mentioned manufacturing method may provide practical water flux, excellent desalting faculty, and oxidizer resistance together.

### Brief Description of the Drawing

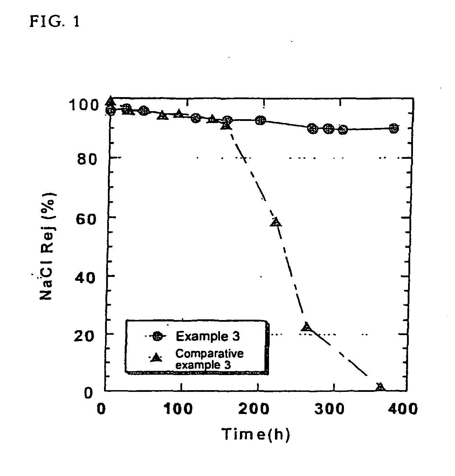

Fig. 1 is a graph showing transition of the rate of blocking salt in oxidizer resistance test of Example 3 and Comparative Example 3.

### Best Mode For Carrying out the Invention

Description of embodiments of the present invention will, hereinafter, be given. A method for manufacturing a composite semipermeable membrane of the present invention is characterized by including a contact step that contacts a specific composite semipermeable membrane to an oxidizing agent. Firstly, description will be provided about a composite semipermeable membrane concerned.

A composite semipermeable membrane in the present invention comprises a thin film including a polyamide based resin having a constitutional unit represented with general formulae (I) and/or (II), and a porous support membrane for supporting the thin film. The polyamide based resin may be obtained by condensation reaction of, for example, a diamine component and a polyfunctional acid halide which is not less than divalent.

R₁₁ and R₂₁ in the general formulae (I) - (II) represent divalent organic groups having a benzene ring or a naphthalene ring in a principal chain, and the benzene ring or the naphthalene ring may be substituted. Practically, there may be mentioned: -C₆H₄-, -CH₂-C₆H₄-CH₂-, -C₆H₃(OH)-, -C₆H₃(CH₃)-, -C₆H₃(C₂H₅)-, -C₆H(CH₃)₃-, -C₆H₃(Cl)-, -C₆H₃(NO₂)-, -C₆H₄-O-C₆H₄-, -C₆H₄-CH₂-C₆H₄-, -C₆H₄-NH-C₆H₄-, -C₆H₄-NHCO-C₆H₄-, -C₆H₄-(CO)-C₆H₄-, -C₁₀H₆-, -C₁₀H₅(SO₃H)-, and -C₁₀H₄(SO₃H)₂-. Substituents may be substituted in any positions, and a relationship of bond positions of divalent groups may be any of para-position meta-position and the like.

Moreover, R₁₂ and R₁₃, and R₂₂ and R₂₃ are independently an alkyl group of carbon numbers 1 - 5 that may include -O- or -S-, or a hydrogen atom, respectively, and at least one of R₁₂ or R₁₃, and R₂₂ or R₂₃ may be an alkyl group of carbon numbers 1 - 5 that may include -O- or -S-. Where, it is preferable that both of R₁₂ and R₁₃, and R₂₂ and R₂₃ are the alkyl groups concerned in view of oxidizer resistance of the composite semipermeable membrane obtained.

As R₁₂ and R₁₃, and R₂₂ and R₂₃, there may be mentioned: for example, -CH₃, -C₂H₅, -C₃H₇, -C₄H₉, -C₅H₁₁, -CH₂OCH₃, -CH₂OCH₂OCH₃, -C₂H₄OCH₃, -C₂H₄OC₂H₅, -CH₂SCH_{3,} -CH₂SCH₂SCH₃, -C₂H₄SCH₃, -C₂H₄SC₂H₅, -C₂H₄NHC₂H₅, -C₂H₄N(CH₃)C₂H₅, etc. Especially, alkyl groups that do not include hetero atom are preferable in the light of, such as, reactivity with polyfunctional acid halides (acid component).

On the other hand, R₁₄ and R₂₄ in general formulae (I) - (II) are divalent or trivalent organic groups and are groups equivalent to a residue of polyfunctional acid halide having not less than divalent that forms a thin film of the present invention with a diamine component represented with R₁₂HNR₁₁NR₁₃H and R₂₂HNR₂₁NR₂₃H by condensation reaction according the above-mentioned definition. Polyfunctional acid halides concerned are not especially limited, but there may be mentioned: for example, propane tricarboxylic acid chloride, butane tricarboxylic acid chloride, pentane tricarboxylic acid chloride, glutaryl halides, adipoyl halides, cyclopropane tricarboxylic acid chloride, cyclobutane tetracarboxylic acid chloride, cyclopentane tricarboxylic acid chloride, cyclopentane tetracarboxylic acid chloride, cyclohexane tricarboxylic acid chloride, tetrahydrofuran tetracarboxylic acid chloride, cyclopentane dicarboxylic acid chloride, cyclobutane dicarboxylic acid chloride, cyclohexane dicarboxylic acid chloride, and tetrahydrofuran dicarboxylic acid chloride, etc. However, it is preferable that they are polyfunctional aromatic acid halides, in the light of, such as reactivity, desalting faculty of the membrane, and water flux. As such polyfunctional aromatic acid halides, there may be mentioned: trimesic acid chloride, trimellitic acid chloride, terephthalic acid chloride, isophthalic acid chloride, pyromellitic acid chloride, biphenyl dicarboxylic acid chloride, naphthalene dicarboxylic acid dichloride, and chloro sulfonyl benzene dicarboxylic acid chloride, etc.

On the other hand, a polyamide based resin in the present invention preferably has a cross-linked structure, and in the case a polyfunctional acid halide having not less than trivalent is preferably used at least in a part of polyfunctional acid halide. In use of polyfunctional acid halide having not less than trivalent, a cross-linked section gives a constitutional unit represented with the general formula (II). And a constitutional unit represented with the general formula (I) is formed with a divalent polyfunctional acid halide, and also when a non-cross linked section of polyfunctional acid halide having not less than trivalent exists, it gives a constitutional unit represented with the general formula (I). In that case, R₁₄ gives divalent organic groups in which carboxyl group and a salt thereof, etc. remain.

The above-mentioned polyamide based resin for forming a thin film may be a homo-polymer, and may be a copolymer including a plurality of above-mentioned constitutional units, and other constitutional units, or blended polymers in which a plurality of homo-polymers are mixed. For example, polyamide based resins having constitutional units represented with the general formula (I) and constitutional units represented with the general formula (II) may be mentioned. As other above-mentioned constitutional units, diamine components including aliphatic group in a principal chain thereof, diamine components not including substituents in a side chain thereof, other diamine components used for polyamide based semipermeable membranes, etc. may be mentioned.

A polyamide based resin in the present invention preferably includes not less than 50 mol% of constitutional units represented with the general formula (I) and/or (II), and more preferably not less than 80 mol%. A content of less than 50 mol% reduces effect of substitution of a nitrogen atom of an amido bond, and a tendency of not satisfying simultaneous practical water flux, excellent desalting faculty, and excellent oxidizer resistance is observed.

The thickness of the thin film (separation active layer) in the present invention, which depends on the process for producing the thin film, is preferably from 0.01 to 100 µm, more preferably from 0.1 to 10 µm. As the thickness is smaller, a better result is caused from the viewpoint of permeation flux. However, if the thickness is too small, mechanical strength of the thin film lowers so that defects are easily generated. Thus, a bad effect is produced on the desalting faculty.

The porous support membrane for supporting the thin film in the present invention is not particularly limited if it can support the thin film. Examples thereof include films of various substances such as polysulfone, polyarylether sulfone such as polyether sulfone, polyimide and polyfluoride vinylidene. In particular, from the viewpoints of chemical, mechanical and thermal stabilities a porous support membrane made of polysulfone or polyarylether sulfone is preferably used. Such a porous support membrane usually has a thickness of about 25 to 125 µm, and preferably has a thickness of about 40 to 75 µm. However, the thickness is not necessarily limited to such a thickness.

The porous support membrane may have a symmetrical structure or an asymmetrical structure. However, the asymmetrical structure is preferred to satisfy both of the supporting function of the thin film and liquid-passing property. The average pore size of the thin film formed side of the porous support membrane is preferably from 1 to 1000 nm.

When the thin film in the present invention is formed on the porous support membrane, the method thereof is not limited at all. Any known method can be used. Examples thereof include interfacial condensation, phase separation and thin-film coating methods. Particularly preferred is an interfacial condensation method of applying an aqueous solution containing a diamine component onto the porous support membrane and then bringing the porous support membrane into contact with a nonaqueous solution containing a polyfunctional acid halide to form a thin film on the porous support membrane. Details of conditions and so on of this interfacial condensation method are described in JP-A Nos. S58-24303, H1-180208 and so on. These known techniques can be appropriately adopted.

In order to make the film-formation easy or improve the performance of the resultant composite semipermeable membrane, various reagents can be caused to be present in the reaction field. Examples of the reagents include polymers such as polyvinyl alcohol, polyvinyl pyrrolidone and polyacrylic acid; polyhydric alcohols such as sorbitol and glycerin; amine salts such as salts of tetraalkylammonium halide or trialkylammonium and an organic acid, which are described in JP-A No. 2-187135; surfactants such as sodium dodecylbenzenesulfonate, sodium dodecylsulfate and sodium laurylsulfate; sodium hydroxide, trisodium phosphate, triethylamine and camphorsulfonic acid, which can remove hydrogen halide generated by condensation polymerization reaction; known acylating catalysts; and compounds having a solubility parameter of 8 to 14 (cal/cm³)^{1/2}, which are described in JP-A No.8-224452.

The method for producing a composite semipermeable membrane of the present invention is characterized by comprising a contact step of bringing a composite semipermeable membrane as described above into contact with an aqueous oxidizer solution.

The used oxidizer is a substance which usually has oxidizing effect, and is not limited at all if it is generally used in the form of an aqueous solution. Examples thereof include permanganic acid, permanganates, chromic acid, chromate, nitric acid, nitrates, peroxides such as hydrogen peroxide, sulfuric acid, hypochlorites, and hypobromites. From the viewpoints of costs, handling performance and so on, hypochlorite, in particular, sodium hypochlorite is preferred.

As methods of contacting the aqueous oxidizer solution to the composite semipermeable membrane in the present invention, any methods, such as immersion, pressurized water permeation, spraying, application, and showering, may be illustrated, and in order to obtain sufficient effect by the contact, atmospheric pressure immersion method or pressurized water permeation method is preferable.

An oxidizer concentration in the aqueous solution may be determined in consideration of desired effect in the case of contact of the oxidizer aqueous solution in an atmospheric pressure immersion method and a pressurized water permeation method. For example, when sodium hypochlorite is used as an oxidizer, a free chlorine concentration is 1 mg/l - 10%, and preferably 10 mg/l - 1%. A fee chlorine concentration of less than 1 mg/l requires a period to be excessively long in order to obtain desired effect, which is not practical in manufacturing or may not provide required effect within an allowable manufacturing period. A free chlorine concentration exceeding 10% causes deterioration of the film, such as reducing desalting faculty of the composite semipermeable membrane, which is not preferable.

If it is in a range in which desired effect is obtained and it is allowed by restrictions on manufacture, a contact period for contact with an aqueous oxidizer solution in atmospheric pressure immersion method and pressurized water permeation method is not limited at all, but any periods may be determined.

A pressure applied to the composite semipermeable membrane by the aqueous solution during contact with the aqueous oxidizer solution in pressurized water permeation method is not limited at all in a range allowed by physical strength of a composite semipermeable membrane and of a member for pressure application or equipment, but the contact may be carried out, for example, in a range of 0.01 MPa -10 MPa.

A shape of the composite semipermeable membrane in case of the process, that is, atmospheric pressure immersion method and pressurized water permeation method is not limited at all. That is, the process may be performed in any film shapes, such as in a shape of a plane film, or a shape of a spiral element.

According to a manufacturing method of the present invention, in case of a test under conditions of pressure of 1.5 MPa, temperature of 25 °C, and pH = 7 using a 0.15% by weight of NaCl aqueous solution, a composite semipermeable membrane having a permeation flux of not less than 1.3 m³/(m²· day), and a rate of blocking salt of not less than 90% may be obtained, and preferably a composite semipermeable membrane having a permeation flux of not less than 1.5 m³/(m² · day), and a rate of blocking salt of not less than 93% may be obtained. Therefore, a composite semipermeable membrane of the present invention has such water flux and desalting faculty.

A permeation flux of less than 1.3 m³/(m² · day) raises a required pressure for obtaining predetermined amount of water, and reduces practicality. Besides, a rate of blocking salt of less than 90% may not provide permeated water with water quality required, but reduces practicality.

Moreover, according to a manufacturing method of the present invention, excellent oxidizer resistance may be simultaneously obtained in addition to the above-mentioned water flux and desalting faculty. Specifically, in transition of a rate of blocking salt of the composite semipermeable membrane, not less than 90% of rejection may be maintained for not less than 200 hours, preferably for not less than 300 hours, when a continuous operation is performed with an operation pressure of 1.5 MPa using raw water including sodium hypochlorite aqueous solution having free chlorine concentration of 100 mg/l.

### Example

Examples of the present invention will be described below.

### Example 1

Aqueous solution including N,N'-dimethyl-m-phenylenediamine 2.5% by weight, sodium lauryl sulfate 0.15% by weight, triethylamines 3% by weight, camphor sulfonic acid 6% by weight, and isopropyl alcohol 30% by weight was contacted with a porous polysulfone supporting film (20 nm of an average pore size in a thin film formation side, asymmetric membrane), and subsequently excessive aqueous solution was removed. Next, an isooctane solution containing trimesic acid chloride 0.1% by weight, and isophthalic acid chloride 0.3% by weight was brought into contact with the surface of the support membrane to cause an interfacial condensation polymerization reaction. Thus a polymer thin film (thickness of 1 micrometer) was formed on the porous support membrane to obtain a composite semipermeable membrane.

Thus obtained composite semipermeable membrane was immersed in a sodium hypochlorite aqueous solution having a free chlorine concentration of 100 mg/l at ordinary temperature for 50 hours, subsequently, was removed from the aqueous solution, and a test was performed at 25 °C, with pH = 7, and under a pressure of 1.5 MPa, using an NaCl aqueous solution having a concentration of 0.15% by weight as a raw water. As a result, the rate of blocking salt showed 96.0% and the permeation flux showed 1.5 m³/(m² · day).

### Example 2

An aqueous solution including N,N'-dimethyl-m-phenylenediamine 2.5% by weight, sodium lauryl sulfate 0.15% by weight, triethylamine 3% by weight, camphor sulfonic acid 6% by weight, and isopropyl alcohol 30% by weight was contacted with a porous polysulfone supporting film (20 nm of an average pore size in a thin film formation side, asymmetric membrane), and, subsequently excessive aqueous solution was removed. Next, an isooctane solution containing trimesic acid chloride 0.1% by weight, and isophthalic acid chloride 0.3% by weight was brought into contact with the surface of the support membrane to cause an interfacial condensation polymerization reaction. Then the film was held in a hot air drying equipment of 120 °C for 3 minutes, a polymer thin film (thickness of 1 micrometer) was formed on the porous support membrane to obtain a composite semipermeable membrane.

A sodium hypochlorite aqueous solution having a free chlorine concentration of 100 mg/l was continuously supplied to the obtained composite semipermeable membrane for 15 hours by a pressure of 1.5 MPa, and a test was performed at 25 °C, with pH = 7, and under a pressure of 1.5 MPa, using an NaCl aqueous solution having a concentration of 0.15% by weight as raw water. As a result, the rate of blocking salt showed 94.5% and the permeation flux showed 1.6 m³/(m² · day).

### Comparative Example 1

A test was performed without performing immersion in the sodium hypochlorite aqueous solution in Example 1. As a result, the rate of blocking salt showed 92.3% and the permeation flux showed 0.7 m³/(m² · day). Comparison with Example 1 proved that the oxidizer treatment increases a permeation flux, without reducing a rate of blocking salt.

### Comparative Example 2

Except for having used N,N'-diethyl ethylenediamine as a diamine component in Example 1, a same method was repeated to manufacture a composite semipermeable membrane , and then a water treatment test was performed, without oxidizer treatment. As a result, the rate of blocking salt showed 87.4% and the permeation flux showed 1.6 m³/(m² · day). Thus obtained composite semipermeable membrane was immersed in a sodium hypochlorite aqueous solution having a free chlorine concentration of 100 mg/l at ordinary temperature for 100 hours, then, it was removed from the aqueous solution and was subjected to the same test. As a result, the rate of blocking salt showed 76.5% and the permeation flux showed 1.5 m³/(m² · day). Thus, use of N,N'-diethyl ethylenediamine provided the low rate of blocking salt, and a same oxidizer treatment reduced both of the rate of blocking salt and water flux. Table 1 shows the above results.

**Table 1**

| No. | Diamine | Oxidizer treatment | Permeation Flux | Rate of blocking salt |
|---|---|---|---|---|
| | | | | |
| | | | (Upper row: Before oxidizer treatment) | (Upper row: Before oxidizer treatment) |
| | | | | |
| | | | (Lower row: After oxidizer treatment) | (Lower row: After oxidizer treatment) |
| | | | | |
| | | | [m³/(m²· day)] | [%] |
| Example 1 | N,N'-dimethyl-m-phenylene 100 mg/l | Immersion in diamine NaOCl | - | - |
| | | | 1.5 | 96.0 |
| Example 2 | N,N'-dimethyl-m-phenylene diamine | 100 mg/l NaOCl pressurized water permeation | - | - |
| | | | 1.6 | 94.5 |
| | | | | |
| Comparative Example 1 | N,N'-dimethyl-m-phenylene diamine | Not treated | 0.7 | 92.3 |
| | | | - | - |
| Comparative Example 2 | N,N'-diethyl ethylene diamine | Immersion in 100 mg/l NaOCl | 1.6 | 87.4 |
| | | | 1.5 | 76.5 |

The results reveal that a composite semipermeable membrane having a polyamide obtained from an aromatic diamine whose hydrogen in N position is substituted by an alkyl group as a skin, simultaneously has practically excellent desalting faculty and oxidizer resistance, and by contacting the composite semipermeable membrane with an aqueous oxidizer solution, water flux may greatly improve, without reducing desalting faculty.

### Example 3

A continuous operation was performed by an operation pressure of 1.5 MPa with a raw water including a sodium hypochlorite aqueous solution having a free chlorine concentration of 100 mg/l, using the composite semipermeable membrane obtained in the Example 1. Fig. 1 shows transition of the rate of blocking salt of the composite semipermeable membrane at this time.

### Comparative Example 3

An aqueous solution including m-phenylenediamine 2.5% by weight, sodium lauryl sulfate 0.15% by weight, triethylamine 3% by weight, and camphor sulfonic acid 6% by weight was contacted with a porous polysulfone supporting film (20 nm of an average pore size in a thin film formation side, asymmetric membrane), and subsequently the excessive aqueous solution was removed.
Next, an isooctane solution containing trimesic acid chloride 0.1% by weight, and isophthalic acid chloride 0.3% by weight was brought into contact with the surface of the support membrane to cause an interfacial condensation polymerization reaction.
A polymer thin film (thickness of 1 micrometer) was formed on the porous support membrane to obtain a composite semipermeable membrane.

A continuous operation was performed by an operation pressure of 1.5 MPa with raw water including a sodium hypochlorite aqueous solution having a free chlorine concentration of 100 mg/l, using thus obtained composite semipermeable membrane. Fig. 1 shows transition of the rate of blocking salt of the composite semipermeable membrane at this time.

As results of Fig. 1 show, although Example 3 of the present invention might maintained an initial rate of blocking salt over a long period (not less than 90% maintained for not less than 300 hours), on the contrary, Comparative example 3 in which a polyamide composite semipermeable membrane including only a primary diamine was used caused deterioration of the membrane by sodium hypochlorite for about 150 hours after start of the test, and showed rapid decline in rate of blocking salt.

### Industrial Applicability

As mentioned above, a composite semipermeable membrane of the present invention is suitable for manufacture of ultra pure water, demineralization of brine water or seawater, etc., and removes and collects pollution sources or effective ingredients included in pollution as public nuisance, such as dyeing wastewater and electro-deposition paint wastewater, to contribute for realizing a closed system for wastewater. Moreover, it may also be used for concentration of effective ingredients for food application etc.

## Claims

1. A method for manufacturing a composite semipermeable membrane, comprising a contacting step in which a composite semipermeable membrane comprising a thin film including a polyamide based resin having a constitutional unit represented with following general formulae (I) and/or (II), and a porous support membrane for supporting the thin film is contacted with an aqueous oxidizer solution: 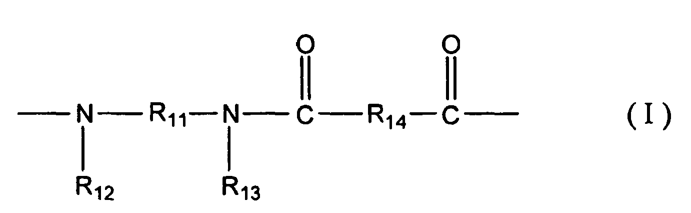 wherein R₁₁ represents a divalent organic group having a benzene ring or a naphthalene ring as a principal chain, R₁₂ and R₁₃ are independently an alkyl group of carbon numbers 1 - 5 that may include -O- or -S-, or a hydrogen atom, respectively, and at least one of R₁₂ and R₁₃ is an alkyl group of carbon numbers 1 - 5 that may include -O- or -S-, and R₁₄ represents a divalent organic group, and 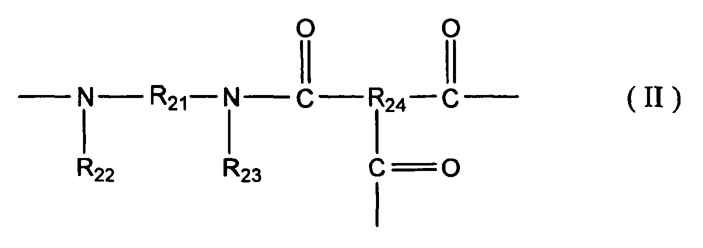 wherein R₂₁ represents a divalent organic group having a benzene ring or a naphthalene ring as a principal chain, R₂₂ and R₂₃ are independently an alkyl group of carbon numbers 1 - 5 that may include -O- or -S-, or a hydrogen atom, respectively, and at least one of R₂₂ and R₂₃ is an alkyl group of carbon numbers 1 - 5 that may include -O- or -S-, and R₂₄ represents a trivalent organic group.

2. The method according to claim 1,
wherein R₁₂ and R₁₃ as well as R₂₂ and R₂₃ are alkyl groups.

3. The method according to claim 1 or 2,
wherein the contacting step is performed by immersing the composite semipermeable membrane in an aqueous oxidizer solution under an atmospheric pressure.

4. The method according to claim 1or 2,
wherein the contacting step is performed by permeating the aqueous oxidizer solution with pressure into the composite semipermeable membrane.

5. The method according to any of claims 1 to 4,
wherein the aqueous oxidizer solution is a sodium hypochlorite aqueous solution, a hydrogen peroxide solution, or an ozone-injected water.

6. A composite semipermeable membrane manufactured by the method according to claim 1,
wherein a permeation flux is not less than 1.3 m³/(m²· day), and a rate of blocking salt is not less than 90% when a test is performed under the conditions of a pressure 1.5 MPa, a temperature of 25 °C, and pH = 7, using 0.15% by weight of NaCl aqueous solution.

## Patentansprüche

1. Verfahren zum Herstellen einer semipermeablen Verbundmembran,
das folgendes aufweist:
einen Kontaktierungsschritt, bei dem eine semipermeable Verbundmembran, die eine dünne Schicht, die ein auf Polyamid basierendes Harz aufweist, das eine Struktureinheit gemäß den folgenden allgemeinen Formeln (I) und/oder (II) besitzt, und eine poröse Trägermembran zum Tragen dieser dünnen Schicht aufweist, mit einer wäßrigen Oxidationsmittellösung in Kontakt gebracht wird: 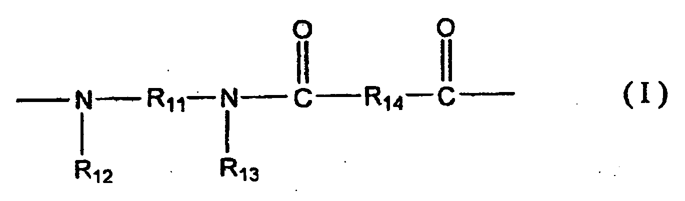
wobei
R₁₁ für einen zweiwertigen organischen Rest mit einem Benzolring oder einem Naphthalinring als Hauptkette steht, R₁₂ und R₁₃ unabhängig voneinander eine Alkylgruppe mit 1 bis 5 Kohlenstoffatomen, die -O- oder -S- aufweisen kann, oder ein Wasserstoffatom sind, und wobei zumindest einer der Reste R₁₂ und R₁₃ eine Alkylgruppe mit 1 bis 5 Kohlenstoffatomen ist, die -O- oder -S- aufweisen kann, und R₁₄ für einen zweiwertigen organischen Rest steht, und 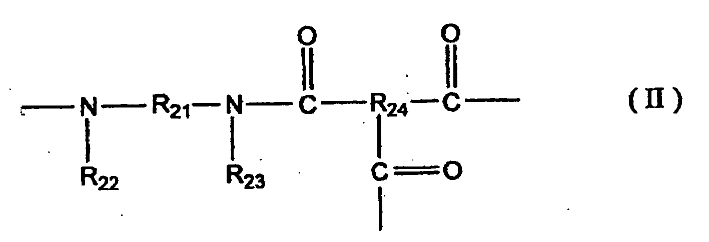 wobei
R₂₁ für einen zweiwertigen organischen Rest mit einem Benzolring oder einem Naphthalinring als Hauptkette steht, R₂₂ und R₂₃ unabhängig voneinander eine Alkylgruppe mit 1 bis 5 Kohlenstoffatomen, die -O- oder -S- aufweisen kann, oder ein Wasserstoffatom sind, und wobei zumindest einer der Reste R₂₂ und R₂₃ eine Alkylgruppe mit 1 bis 5 Kohlenstoffatomen ist, die -O- oder -S- aufweisen kann, und R₂₄ für einen dreiwertigen organischen Rest steht.

2. Verfahren nach Anspruch 1,
wobei R₁₂, und R₁₃ sowie auch R₂₂ und R₂₃ Alkylgruppen sind.

3. Verfahren nach Anspruch 1 oder 2,
wobei der Kontaktierungsschritt durch Eintauchen der semipermeablen Verbundmembran in eine wäßrige Oxidationsmittellösung unter Atmosphärendruck durchgeführt wird.

4. Verfahren nach Anspruch 1 oder 2,
wobei der Kontaktierungsschritt durch Eindringen der wäßrigen Oxidationsmittellösung unter Druck in die semipermeable Verbundmembran durchgeführt wird.

5. Verfahren nach einem der Ansprüche 1 bis 4,
wobei die wäßrige Oxidationsmittellösung eine wäßrige Natriumhypochloritlösung, eine Wasserstoffperoxidlösung oder Wasser ist, in das Ozon injiziert worden ist.

6. Semipermeable Verbundmembran,
die mit einem Verfahren gemäß Anspruch 1 hergestellt ist,
wobei der Permeationsfluß bei nicht weniger als 1,3 m³/(m² · Tag) liegt und die Salzblockierungsrate nicht weniger als 90 % beträgt, wenn ein Test unter Bedingungen mit einem Druck von 1,5 MPa, einer Temperatur von 25 °C und einem pH-Wert von pH = 7 durchgeführt wird, wobei eine wäßrige NaCl-Lösung mit 0,15 Gew.-% verwendet wird.

## Revendications

1. Procédé de fabrication d'une membrane composite semiperméable, comprenant une étape de mise en contact dans laquelle une membrane composite semiperméable comprenant un film mince comprenant une résine à base de polyamide ayant une unité constitutive représentée par les formules générales suivantes (I) et/ou (II), et une membrane de support poreuse pour supporter le film mince est mise en contact avec une solution oxydante aqueuse : 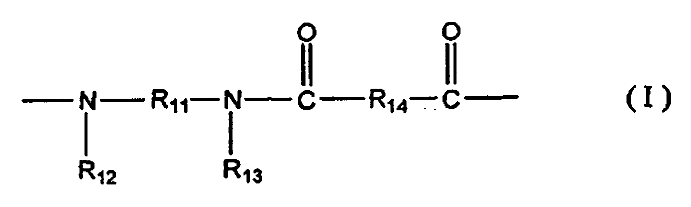 où R₁₁ représente un groupe organique divalent ayant un noyau benzénique ou un noyau naphtalène en tant que chaîne principale, R₁₂ et R₁₃ sont indépendamment un groupe alkyle avec un nombre de carbones de 1 à 5 qui peut comprendre -O- ou -S-, ou un atome d'hydrogène, respectivement, et au moins l'un parmi R₁₂ et R₁₃ est un groupe alkyle avec un nombre de carbones de 1 à 5 qui peut comprendre -O- ou -S-, et R₁₄ représente un groupe organique divalent, et 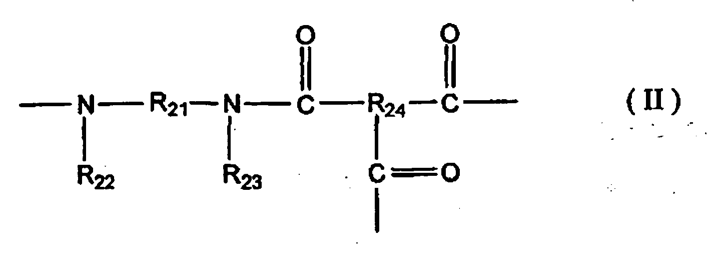 où R₂₁ représente un groupe organique divalent ayant un noyau benzénique ou un noyau naphtalène en tant que chaîne principale, R₂₂ et R₂₃ sont indépendamment un groupe alkyle avec un nombre de carbones de 1 à 5 qui peut comprendre -O- ou -S-, ou un atome d'hydrogène, respectivement, et au moins l'un parmi R₂₂ et R₂₃ est un groupe alkyle avec un nombre de carbones de 1 à 5 qui peut comprendre -O- ou -S-, et R₂₄ représente un groupe organique trivalent.

2. Procédé selon la revendication 1,
où R₁₂ et R₁₃ ainsi que R₂₂ et R₂₃ sont des groupes alkyle.

3. Procédé selon la revendication 1 ou 2,
où l'étape de mise en contact est réalisée par l'immersion de la membrane composite semiperméable dans une solution oxydante aqueuse sous une pression atmosphérique.

4. Procédé selon la revendication 1 ou 2,
où l'étape de mise en contact est réalisée en faisant passer la solution oxydante aqueuse sous l'effet d'une pression dans la membrane composite semiperméable.

5. Procédé selon l'une quelconque des revendications 1 à 4,
où la solution oxydante aqueuse est une solution aqueuse d'hypochlorite de sodium, une solution de peroxyde d'hydrogène, ou de l'eau riche en ozone.

6. Membrane composite semiperméable fabriquée par le procédé selon la revendication 1, où un flux de perméation n'est pas inférieur à 1,3 m³/(m² jour), et un taux de blocage de sel n'est pas inférieur à 90 % quand un essai est réalisé dans les conditions d'une pression de 1,5 MPa, à une température de 25 °C, et à pH = 7, en utilisant 0,15 % en poids d'une solution aqueuse de NaCl.
